Europäisches Patentamt

European Patent Office

Office européen des brevets

(19)

(11) EP 0 582 082 B1

(12) EUROPÄISCHE PATENTSCHRIFT

(45) Veröffentlichungstag und Bekanntmachung des Hinweises auf die Patenterteilung:
26.03.1997 Patentblatt 1997/13

(51) Int Cl.6: G01N 11/06

(21) Anmeldenummer: 93110480.6

(22) Anmeldetag: 01.07.1993

(54) **Verfahren und Verwendung einer Vorrichtung zur Bestimmung der Viskosität von Flüssigkeiten**

Method for determining the viscosity of liquids and use of a device for performing the method

Procédé pour déterminer la viscosité de liquides et utilisation d'un dispositif mettant en oeuvre ce procédé

(84) Benannte Vertragsstaaten:
CH DE DK FR LI

(30) Priorität: 06.07.1992 DE 4222111
23.06.1993 DE 4320813

(43) Veröffentlichungstag der Anmeldung:
09.02.1994 Patentblatt 1994/06

(73) Patentinhaber: SCHOTT-GERÄTE GMBH
D-65701 Hofheim (DE)

(72) Erfinder:
• Lehmann, Jochen K., Dr.
D-2520 Rostock 27 (DE)
• Glatzer, Roland
D-6208 Bad Schwalbach (DE)
• Hartmann, Jutta, Dr.
D-6108 Weiterstadt (DE)
• Wagner, Dieter
D-6200 Wiesbaden (DE)

(56) Entgegenhaltungen:
WO-A-87/00626          DE-A- 2 115 396
DE-A- 3 331 659        DE-A- 3 611 867
DE-A- 3 712 394        FR-A- 2 221 993
FR-A- 2 338 487        US-A- 2 048 305
US-A- 4 893 500

## Beschreibung

Die Erfindung betrifft ein Verfahren zur Bestimmung der Viskosität von Flüssigkeiten mit einem Kapillarviskosimeter, welches aus einem Vorratsgefäß und einem Kapillarrohr besteht.

Das Ergebnis ist wahlweise die kinematische oder die dynamische Viskosität.

Viskositäten von Flüssigkeiten werden üblicherweise mit Kapillar-viskosimetern nach Ostwald bzw. nach Ubbelohde bestimmt. Eine moderne Darstellung dieser Geräte ist in: A. Nagashima, J.V. Sengers, W.A. Wakeham: Experimental Thermodynamics Vol. III: "The Measurement of Transport Properties of Fluids", Blackwell, Oxford 1991, gegeben.

Dort beschriebene Kapillarviskosimeter arbeiten so, daß eine Flüssigkeit über einer Kapillare steht und die Flüssigkeit durch ihren eigenen hydrostatischen Druck durch die Kapillare hindurch gedrückt wird. Die Flüssigkeit befindet sich in einem in der Regel kugelförmigen Gefäß, an das sich oben und unten zylindrische Rohre anschließen. An diesen zylindrischen Rohren befinden sich Meßmarken. Passiert der Flüssigkeitsmeniskus diese Meßmarken, so erfolgt manuell oder elektronisch jeweils eine Zeitmessung. Meßgröße ist die Zeit, die der Meniskus der Flüssigkeit zum Passieren der Meßmarken benötigt.

Die Verwendung eines kugelförmigen Gefäßes bei den bekannten Viskosimetern dient dem Zweck, den hydrostatischen Druck, der von der Höhe der Flüssigkeitssäule in der Kapillare und im Vorratsgefäß abhängig ist, während der Messung weitgehend konstant zu halten. Durch die Vergrößerung des Innenvolumens im kugelförmigen Gefäß führt selbst eine größere Masse an durchfließender Flüssigkeit zu einer nur vergleichsweise geringen Höhenänderung des oberen Meniskus der Flüssigkeitssäule und damit zu einer nicht allzu starken Änderung des hydrostatischen Druckes.

Bei der oben beschriebenen Messung an Meßmarken findet die kontinuierliche Änderung des treibenden hydrostatischen Druckes keine Berücksichtigung, sondern es wird lediglich ein Mittelwert des Druckes zwischen den beiden Meßmarken gebildet, der dann als treibender Druck in die Auswertung eingeht.

Mit den bekannten Viskosimetern können Viskositäten mit hoher Genauigkeit bestimmt werden, allerdings sind die Messungen sehr zeitaufwendig. So benötigt man z.B. für die Messung von Ölen mit einem Ubbelohde-Viskosimeter mindestens 20 Minuten. Solche Viskosimeter sind für die Durchführung schneller Messungen wie sie z. B. bei der Eingangs/Ausgangskontrolle für Mineralölprodukte in Raffinerien benötigt werden, nicht vorteilhaft.

DE-A-3 712 394 offenbart ein Viskosimeter, das die viskosität einer Flüssigkeit durch Messen der Auslaufzeit durch eine Kapillare eines bestimmten Volumens und durch die Ausnutzung des Hagen-Poisseuille-schen Gesetzes.

Aufgabe der Erfindung ist, ein Verfahren zur Bestimmung der Viskosität von Flüssigkeiten bereitzustellen, welches schnell und zuverlässig zu Ergebnissen mit vergleichsweise hoher Genauigkeit führt.

Diese Aufgabe wird hinsichtlich des Verfahrens dadurch gelöst, daß bei dem eingangs beschriebenen Verfahren die Änderung der Durchflußgeschwindigkeit der Flüssigkeit durch das Viskosimeter erfaßt und aus den gemessenen Daten unter Ausnutzung des Hagen-Poiseuille'schen Gesetzes die Viskosität der Flüssigkeit bestimmt wird. Eine Verwendung einer geeigneten Vorrichtung ist in Patentanspruch 13 beschrieben.

Das erfindungsgemäße Verfahren macht sich für die Viskositätsbestimmung gerade die üblicherweise unerwünschte Druckhöhenänderung während der Messung zunutze. Daß diese Vorgehensweise zum Erfolg führt, ist für den Fachmann völlig überraschend. Wie bereits eingangs ausgeführt wurde, wurden bisher alle gebräuchlichen Kapillarviskosimeter mit dem Ziel konzipiert, den als störend angesehenen Effekt der Änderung des hydrostatischen Druckes während der Messung möglichst auszuschalten. In vielen Fällen wurde dieses Ziel wenigstens annähernd erreicht, so z. B. bei den oben genannten Ubbelohde/Ostwald-Viskosimetern. Wo dieses Ziel nicht erreicht wurde, wie z. B. bei den sog. Steigrohrviskosimetern, muß man sich sogar mit unterschiedlichen Arbeitskonstanten für ein und dasselbe Viskosimeter behelfen, abhängig von der sich ergebenden Druckhöhenänderung während der Messung.

Eine weitere Möglichkeit, die Druckhöhenänderung während der Messung auszuschalten, ist das Anwenden von Fremddruck, der z. B. bei Ubbelohde-Viskosimetern gleichschenkliger Bauart oder auch bei Ostwald-Viskosimetern bestimmter Bauart angewendet wird.

In allen bekannten Fällen wurde jedoch die trotz aller Maßnahmen immer noch vorhandene Druckdifferenz zwischen Meßanfang und Meßende als störend angesehen. Daß gerade diese Druckdifferenz erfolgreich zur Bestimmung der Viskosität ausgenutzt werden kann, ist somit völlig unerwartet.

Bei den Versuchen, die zu der beschriebenen Erfindung führten, wurde gefunden, daß die kontinuierliche Änderung des treibenden Druckes nicht nur zur Bestimmung der Viskosität ausgewertet werden kann, sondern daß dadurch sogar Störgrößen eliminiert werden können, die bisher in der Kapillarviskosimetrie zu Unsicherheiten führten. Dies erfolgt dadurch, daß das sich ändernde Verhältnis von ausfließender Masse zu Zeit charakteristisch von der Viskosität der Meßflüssigkeit abhängt. Dazu wurden mehrere Möglichkeiten zur Auswertung gefunden.

Nach der Erfindung sind je nach Anwendungsgebiet drei verschiedene Verfahren zur Bestimmung der Änderung der Durchflußgeschwindigkeit bevorzugt:

1. die Messung der pro Zeiteinheit aus dem Kapillarviskosimeter ausfließenden Masse der Flüssigkeit

2. die Messung der Tropfenfolge der aus dem Kapillarviskosimeter austretenden Flüssigkeit in Abhängigkeit von der Zeit, wobei ggf. auch noch der Abtropfvorgang erfaßt werden kann, und
3. die Messung der Höhenänderung des Flüssigkeitsmeniskus im Vorratsgefäß in Abhängigkeit von der Zeit.

Die Auswertung dieser Messungen zur Bestimmung des Viskositätskoeffizienten der Flüssigkeit wird im folgenden am Beispiel der Messungen der pro Zeiteinheit ausfließenden Masse (Fall 1) aufgezeigt. Diese Art der Auswertung läßt sich, wie im folgenden noch deutlich wird, durch geringfügige Modifikationen der verwendeten Gleichungen ohne weiteres auch auf die Verfahren 2 und 3 sowie auf andere Methoden zur Bestimmung der zeitlichen Änderung der Durchflußgeschwindigkeit übertragen.

Im Mittelpunkt steht im folgenden die Möglichkeit, daß mit dem Verfahren und der Vorrichtung eine automatisierte kontinuierliche Verfolgung des Meßwertes "Masse als Funktion der Zeit" erfolgt, die dann im funktionalen Zusammenhang " dm/dt = f(m)" ausgewertet wird. Diese Art der Messung trägt dem physikalischen Sachverhalt, nach dem der hydrostatische Druck der Flüssigkeitssäule bei abnehmender Höhe der Flüssigkeitssäule abnimmt, sehr gut Rechnung.

Der Zusammenhang zwischen Masse und Zeit, der durch die Strömung der Flüssigkeit durch die Kapillare gegeben wird, läßt sich mit dem Hagen-Poiseuille'schen Gesetz beschreiben:

$$\frac{dv}{dt} = \frac{\pi \cdot r^4 (p_1 - p_0)}{8\eta l} \tag{1}$$

(dv/dt: pro Zeiteinheit durch das Kapillarrohr durchgesetztes Volumen, r: Radius des Kapillarrohres, $(p_1 - p_0)$: Druckdifferenz an den Enden der Kapillare, $\eta$: dynamischer Viskositätskoeffizient der Flüssigkeit, l: Länge des Kapillarrohres).

Sowohl das Volumen v als auch der treibende Druck p können als Funktion der Masse m der Flüssigkeit dargestellt werden. Man erhält für das Volumen

$$v = \frac{m}{\rho} \tag{2}$$

(v: Volumen, m: Masse, $\rho$: Dichte der Flüssigkeit)
und für den Druck der Flüssigkeitssäule im Vorratsgefäß mit der Querschnittsfläche A über der Kapillare

$$p_1 = \frac{mg}{A} + p_0 \tag{3}$$

$p_1$: Druck am oberen Ende des Kapillarrohres, m: Masse der Flüssigkeitssäule im Vorratsgefäß, g: Erdbeschleunigung, A: Querschnittsfläche des Vorratsgefäßes, $p_0$: Druck am unteren Ende des Kapillarrohres).

Da der hydrostatische Druck $p_1$ der Flüssigkeitssäule und damit der treibende Druck beim Auslaufen der Flüssigkeit abnimmt, ergibt sich aus Gl. (1), (2) und (3) ein funktionaler Zusammenhang in der Form

$$\frac{dm}{dt} = km \tag{4}$$

mit

$$k = \frac{\pi r^4 g\rho}{8\eta l A} \tag{5}$$

bzw. mit

$$A = \pi R^2 \tag{6}$$

erhält man

$$k = \frac{r^4 g \rho}{8 \eta l R^2} \qquad (7)$$

(R: Radius des Vorratsgefäßes).

Experimentell wurde gefunden, daß bei den Viskositätsmessungen in der oben beschriebenen Weise aufgrund der Nicht-Idealität des experimentellen Aufbaus Terme auftauchen, die in Gl. (4) die Wirkung einer zusätzlichen, konstanten Masse haben. Damit geht Gl. (4) über in

$$\frac{dm}{dt} = km + c \qquad (8)$$

wobei die Konstante c die Summe additiver Korrekturterme ist.

Bei Konstanz der Parameter des Kapillarrohres (Länge l, Radius r) und bei Konstanz der Querschnittsfläche A des Vorratsgefäßes ist der Viskositätskoeffizient der durchströmenden Flüssigkeit für die Größe des Proportionalitätsfaktors k entscheidend und damit aus den Meßwerten bestimmbar.

Kennt man die apparativen Parameter Kapillarrohrlänge l, Kapillarrohrradius r sowie Querschnittsfläche A bzw. Radius R des Vorratsgefäßes, so läßt sich aus k der kinematische Viskositätskoeffizient $\nu$

$$\nu = \frac{\eta}{\rho} \qquad (9)$$

bestimmen. Die apparativen Parameter l, r, A bzw. R werden absolut bestimmt oder durch Eichung an einer Flüssigkeit genau bekannter Viskosität (z. B. Wasser) ermittelt. Kennt man weiterhin die Dichte der Flüssigkeit, so läßt sich aus Gleichung (9) der dynamische Viskositätskoeffizient ermitteln.

Wegen des Auftretens der Konstante c in der Diffentialgleichung (8) wird die übliche Auswertung dieses Gleichungstyps über eine Integration erschwert. Es wird daher vorzugsweise der Weg gewählt, die Meßwerte "m = f(t)" zu differenzieren und die differenzierte Form als lineare Gleichung (8) auszuwerten. Die Differentiation wird dadurch erleichtert, daß aufgrund der kontinuierlichen Auswertung der Messung eine nahezu beliebig große Anzahl von experimentellen Wertepaaren zur Verfügung gestellt werden kann. Die Differentiation kann beispielsweise nach einem Verfahren aus R. Ludwig: "Methoden der Fehler- und Ausgleichsrechnung", VEB DVW, Berlin 1969 erfolgen.

Die oben beschriebene Art der Auswertung ist nicht nur für den Fall 1, sondern auch noch für die Auswertung der Messung der Tropfenfolge geeignet, sofern hierbei auch noch der Abtropfvorgang erfaßt wird. Unter Erfassung des Abtropfvorgangs soll hierbei die Bestimmung der Tropfenform und -größe verstanden werden. Es hat sich gezeigt, daß die Tropfengröße während der gesamten Messung nahezu konstant bleibt, d. h. sie hängt nur von der Oberflächenspannung und der Abtropfspitze des Kapillarviskosimeters, nicht jedoch von der Änderung des hydrostatischen Druckes in der Flüssigkeitssäule ab. Über die bekannte Tropfengröße bzw. Tropfenform läßt sich bei bekannter Dichte die Tropfenmasse und damit durch Beobachtung der Tropfenfolge die pro Zeiteinheit abfließende Masse bestimmen.

Zur Auswertung der Messungen der Tropfenfolge (ohne Massenbestimmung) und der Änderung der Höhe der Flüssigkeitssäule in Abhängigkeit von der Zeit (Fälle 2 und 3) kann Gleichung (8) zusammen mit Gleichung (2) in einfacher Weise auf eine Volumenänderung umgeformt werden. Hierbei tritt an die Stelle der Masse m in Gleichung (8) das Volumen v.

Bei der Messung der Tropfenfolge in Abhängigkeit von der Zeit wird der Zeitpunkt aufgenommen, zu welchem ein Tropfen eine vorgegebene Meßstelle passiert. Es liegt auf der Hand, daß diese Meßstelle für alle Tropfen der Einfachheit halber dieselbe ist. Zur Erfassung des Durchgangs eines Tropfens durch die Meßstelle können beispielsweise geeignete optische Abtasteinrichtungen, wie z. B. Lichtschranken oder Vorrichtungen zur Bilderkennung (= z. B. CCD-Zeilen), verwendet werden.

Die Zahl der Meßpunkte, d. h. der "erfaßten" Tropfen richtet sich nach der gewünschten Meßgenauigkeit. Es hat sich gezeigt, daß mit der Messung von etwa 10 Tropfen schon sehr gute Ergebnisse erzielt werden können. Dies bedeutet sehr kurze Zeitdauern für die Durchführung einer Messung. In der Regel werden für eine Messung 20 s benötigt. Die kurzen Meßzeiten gelten allgemein für das erfindungsgemäße Verfahren und sind unabhängig davon, auf welche Art und Weise die Änderung der Durchflußgeschwindigkeit der Flüssigkeit durch das Viskosimeter erfaßt wird (Fälle 1 bis 3).

Die Bestimmung der Änderung der Höhe der Flüssigkeitssäule (bzw. des oberen Flüssigkeitsmeniskus) in dem Vorratsgefäß in Abhängigkeit von der Zeit kann vorteilhafterweise dadurch erfolgen, daß das Vorratsgefäß im Meßbereich in vorgegebene Längenabschnitte unterteilt wird, die jeweils gleichen Flüssigkeitsvolumina entsprechen, beispielsweise in jeweils gleiche Längenabschnitte bei Verwendung zylindrischer Präzisionsrohre als Vorratsgefäß und mittels geeigneter Meßeinrichtungen, wie z. B. Lichtschranken, Kamerazeilen und Diodenarrays, jeweils die Zeitdauer für den Durchgang des Flüssigkeitsmeniskus durch einen jeden Längenabschnitt erfaßt wird. Bei dieser Art der Messung, wie auch im Falle der Bestimmung der Tropfenfolge lassen sich Kurven: Volumenänderung pro Zeit dv/dt in Abhängigkeit vom Volumen v auftragen, aus deren Steigung nach Gleichung (7) und der oben beschriebenen Auswertung hinsichtlich der apparativen Konstanten sich Viskositätskoeffizienten ermitteln lassen. Dabei ist die Kenntnis der Tropfenvolumen bzw. der Flüssigkeitsvolumina, die in den vorgegebenen Längenabschnitten eingeschlossen sind, nicht erforderlich, solange nur diese Volumina, so wie es bei der beschriebenen Vorgehensweise der Fall ist, während der Messung konstant sind.

Die oben beschriebenen Verfahren zur Messung der Änderung der Durchflußgeschwindigkeit der Flüssigkeit durch das Viskosimeter sind bevorzugte Verfahren und nicht die einzig möglichen. Der Fachmann wird ohne weiteres noch eine Reihe weiterer Verfahren finden, die ebenso geeignet sind, beispielsweise auch an bestimmte Anwendungsfälle angepaßt sind.

Wenn sich der Fachmann vor die Aufgabe gestellt sieht, ein für die Durchführung des erfindungsgemäßen Verfahrens geeignetes Kapillarviskosimeter aufzufinden, wird er in der Regel so vorgehen, daß er anhand bekannter Datensammlungen für die Viskosimetrie, beispielsweise der DIN-Norm 51 562, den passenden Kapillardurchmesser für den ihn interessierenden Viskositätsbereich auswählt. Der Durchmesser des Vorratsgefäßes muß selbstverständlich größer sein als der Durchmesser der Kapillare, um die Änderung des hydrostatischen Druckes während der Messung meßbar zu machen. Bei gleichem Durchmesser von Kapillare und Vorratsgefäß würden sich die Reibungskraft und die treibende Druckkraft annähernd ausgleichen und die Flüssigkeit würde die Kapillare mit gleichbleibender Geschwindigkeit durchfließen. Je größer der Durchmesser des Vorratsgefäßes im Vergleich zum Durchmesser der Kapillare ist, um so größer werden die meßbaren Effekte. Die Änderung der Durchflußgeschwindigkeit wird vorerst mit zunehmendem Durchmesser des Vorratsgefäßes größer, durchläuft ein Maximum und wird schließlich mit noch größerem Durchmesser des Vorratsgefäßes wieder nicht-meßbar klein. Dies ist darauf zurückzuführen, daß bei einem sehr großen Durchmesser des Vorratsgefäßes im Vergleich zur Kapillare der hydrostatische Druck sich ähnlich, wie es bei den bekannten Viskosimetern mit aufgeweitetem Längenabschnitt im Meßbereich des Vorratsgefäßes der Fall ist, nur noch unwesentlich bei Durchgang eines vorgegebenen Flüssigkeitsvolumens durch die Kapillare ändert.

Im allgemeinen wird der Fachmann die Abmessungen des Viskosimeters, z. B. das Durchmesserverhältnis von Vorratsgefäß zu Kapillarrohr so wählen, daß ein maximaler Effekt auftritt, wobei auch die Genauigkeit der Zeitmessung eine große Rolle spielt. Bei gebräuchlichen Anwendungen hat es sich gezeigt, daß Durchmesserverhältnisse von 1: 1,5 bis 1:50 für Kapillare: Vorratsgefäß besonders günstig sind. Die Zeitmessung sollte in der Regel besser als 1/10 sec sein, um zu ausreichend genauen Meßergebnissen zu kommen.

Die Länge der Kapillare wirkt sich auf die Durchflußgeschwindigkeit aus. Je länger die Kapillare ist, um so langsamer durchfließt die Flüssigkeit das Viskosimeter.

Die Länge des Vorratsgefäßes beeinflußt ebenfalls die Durchflußgeschwindigkeit: je höher die über der Kapillare stehende Flüssigkeitssäule ist, um so höher ist der treibende hydrostatische Druck. Daraus folgt, daß insbesondere dann, wenn ein Abtropfen der Flüssigkeit aus der Kapillare gewünscht ist und nicht ein kontinuierlicher Fluß, die Länge des Vorratsgefäßes (die i. allg. an die Höhe der Flüssigkeitssäule angepaßt ist) nicht zu groß sein sollte. Andererseits muß das Vorratsgefäß ausreichend hoch sein, um bei Messung der Massenänderung eine ausreichende Flüssigkeitsmenge aufnehmen bzw. um bei Messung der Höhenänderung der Flüssigkeitssäule als Funktion der Zeit ausreichend viele Längenabschnitte für die Bestimmung der Durchflußgeschwindigkeit festlegen zu können. Es hat sich gezeigt, daß bei einem Viskosimeter zur Messung vom Viskositätskoeffizienten im Bereich von 0,5 mm$^2$/s bis 10 mm$^2$/s mit einem Kapillarviskosimeter von r = 0,2 mm und einer Kapillarlänge von 20 mm bzw. einem Durchmesser des Vorratsgefäßes von 2,5 mm in der Regel eine Länge des Vorratsgefäßes im Bereich von 10 bis 15 cm günstig ist. Es können bei diesen Abmessungen am Vorratsgefäß ca. 10 Meßstellen in regelmäßigen Abständen von 10 mm installiert werden, die eine ausreichend genaue und sichere Bestimmung der Viskosität gewährleisten.

Desgleichen sollte bei einer Messung der Änderung der Durchflußgeschwindigkeit über die ausfließende Masse bei einem Viskosimeter, wie oben beschrieben, das Vorratsgefäß hoch genug sein, um wenigstens 2 g der Flüssigkeit zu fassen, um auch hier eine ausreichende Genauigkeit der Messung zu gewährleisten.

Die obigen Ausführungen zeigen, daß bei der Wahl geeigneter Abmessungen für ein Kapillarviskosimeter nach der Erfindung eine Vielzahl von Gesichtspunkten zu beachten sind. Insbesondere können bei der Auswahl der Parameter gegenläufige Effekte auftreten. Es existieren aber i. allg. ausreichend große Bereiche für die festzulegenden Größen, innerhalb welcher günstige Ergebnisse erzielt werden können, so daß der Fachmann mit eigenen wenigen Routineexperimenten bzw. -rechnungen das für seine Anwendung optimal ausgelegte Viskosimeter auffinden kann.

Das erfindungsgemäße Verfahren hat den Vorteil, daß es eine schnelle und sichere Bestimmung von Viskositäten von Flüssigkeiten erlaubt, wobei eine relativ hohe Meßgenauigkeit gewährleistet ist. Es kann daher z. B. für die Eingangs- und die Ausgangskontrolle für Mineralölprodukte eingesetzt werden. Das Viskosimeter zeichnet sich, wie nachfolgend noch in der Figurenbeschreibung gezeigt wird, durch einen sehr einfachen, stabilen Aufbau aus.

Nachfolgend wird die Erfindung anhand der Figuren und eines Ausführungsbeispiels näher erläutert.

Es zeigen:

Fig. 1:     Gestaltung eines Kapillarviskosimeters nach der Erfindung
Fig. 2:     eine Meßanordnung mit stehendem Viskosimeter nach Fig. 1
Fig. 3:     eine Meßanordnung mit hängendem Viskosimeter nach Fig. 1
Fig. 4:     Darstellung einer Meßkurve m = f(t)
Fig. 5:     Darstellung der differentiellen Änderung des Anstiegs der Meßkurve m = f(t) aus Fig. 4 als Funktion der Masse

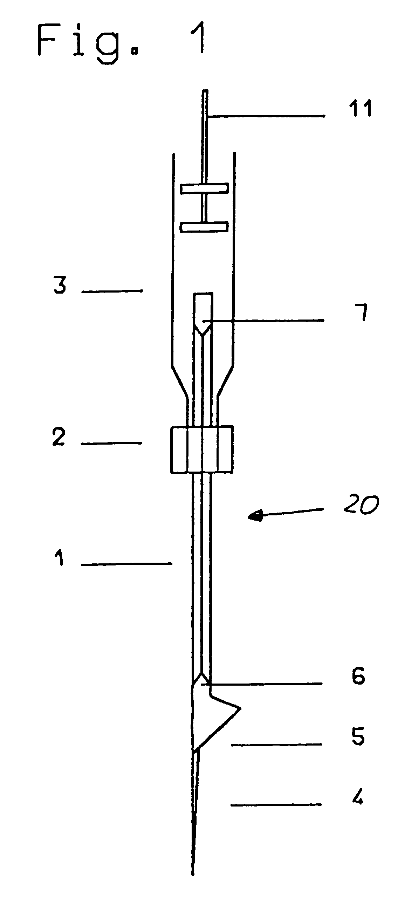

Fig. 1 zeigt in einer schematischen Darstellung ein Viskosimeter (2). Es besteht aus einem Vorratsgefäß (3) und einem Kapillarrohr (1). Die für Viskositätsmessungen erforderliche Temperiervorrichtung ist nicht Gegenstand der beschriebenen Erfindung und ist in Fig. 1 nicht gezeigt.

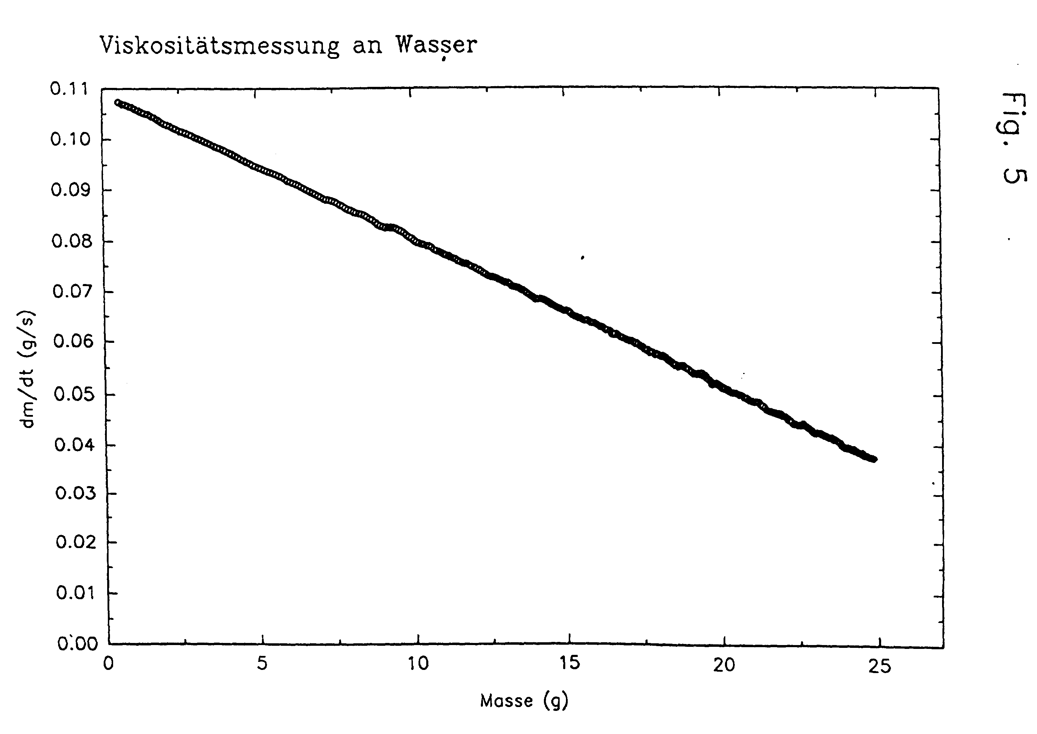

Die bevorzugte Form des Vorratsgefäßes (3) ist zylindrisch. Es hat sich jedoch gezeigt, daß andere Formen für weitere Auswertungen erforderlich sein können. Wenn z. B. der Querschnitt an einer oder mehreren Stellen definiert verändert wird, so wird nach Fig. 5 keine reine Gerade erhalten, sondern ein Kurvenbild, das aus aufeinanderfolgenden parallelversetzten Geraden besteht. Jede der auf diese Art und Weise entstandenen Treppenstufen in der Grafik entspricht genau einer Stelle am Vorratsgefäß (3), an der der Querschnitt verändert wurde.

Die Querschnittsveränderung (11) kann alternativ auch dadurch erreicht werden, daß ein Formkörper von oben in das Vorratsgefäß (3) eingebracht wird, der durch seine Form eine Veränderung des wirksamen Querschnittes an definierten Stellen innerhalb des Vorratsgefäßes (3) hervorruft.

Durch in definierten Abständen angebrachte Querschnittsänderungen ist es möglich, in der gewonnenen Meßkurve Meßmarken zu setzen, die den Durchfluß eines definierten Flüssigkeitsvolumens kennzeichnen. Auf diese Weise ist es möglich, die Masse der ausgelaufenen Flüssigkeit mit ihrem Volumen ins Verhältnis zu setzen und somit die Dichte der Flüssigkeit zu bestimmen. Eine weitere Möglichkeit der Volumenbestimmung im Vorratsgefäß (3) erfolgt durch zwei Lichtschranken, die ein definiertes Volumen eingrenzen.

Die Erfindung ist somit keinesfalls auf die zylindrische Gestalt des Vorratsgefäßes (3) beschränkt. Je nach Anwendung können auch andere Formvarianten von Vorteil sein.

Vorratsgefäße mit anderen Formvarianten können für Messungen von Flüssigkeiten mit nicht-newtonschem Fließverhalten von Vorteil sein. Hier können z. B. trichter-, tulpen- oder trompetenförmige Vorratsgefäße dazu dienen, die für diese Fälle resultierenden (zunächst nichtlinearen) Kurven nach Fig. 5 zu Geraden innerhalb von Routinemessungen zu variieren.

Die Form der Kapillare (1) ist im Regelfall gerade gestreckt, und der Innendurchmesser ist über die gesamte Länge konstant. Um jedoch das Verhältnis von Druckhöhe zu Kapillarlänge und -durchmesser beeinflussen zu können, sind auch andere Formen vorgesehen, die z. B. spiralen-, sägezahn- oder treppenförmig gebogen sind.

Bezüglich der Verbindung zwischen Vorratsgefäß (3) und Kapillare (1) sind je nach Anforderung, Flexibilität und Probenanfall zwei Möglichkeiten vorgesehen: Die feste Verbindung, z. B. eine Verschmelzung oder eine Verklebung, oder die austauschbare Verbindung, z. B. mit Verschraubungen oder auch mit Schläuchen (2).

Die Form von Ein- und/oder Auslauf (7, 6) der Kapillare sind für die meisten Messungen von großer Bedeutung. Der Einlauf (7) ist im Normalfall trichter- oder trompetenförmig, um ein laminares Fließverhalten zu gewährleisten. Das gleiche gilt in verstärktem Maße für den Auslauf (6). Andere Formen von Ein- und/oder Auslauf (7, 6) können den Meßablauf wesentlich beeinflussen. So bewirkt z. B. eine kegelförmig geformte Abtropfspitze direkt am Kapillarende eine sehr gleichmäßige Tropfenbildung, andererseits kann eine größere angeformte Trompete ein besonders gleichmäßiges Ablaufen ergeben. Da die Oberflächenspannung großen Einfluß auf den Abtropfvorgang hat, können Geschwindigkeit und Aussagekraft des Ergebnisses mit der Form des Kapillarauslaufs (6) stark beeinflußt werden. Eine Möglichkeit, die Tropfen generell zu vermeiden, besteht darin, die Kapillare (1) oder ein an sie angefügtes Teil in eine Flüssigkeit eintauchen zu lassen. Aus praktischen Gründen kann es erforderlich werden, daß Vorratsgefäß (3) und Kapillare (1) in irgend einem Winkel zueinander angeordnet sind oder aber in nicht-senkrechter Lage eingesetzt werden. Bevorzugt wird das Viskosimeter (2) in senkrechter Lage eingesetzt, die Achsen von Vorratsgefäß (3) und Kapillare (1) sind identisch. Die verwendeten Materialien richten sich im wesentlichen nach der zu erwartenden Korrosion durch die Meßflüssigkeit, vorzugsweise wird Glas verwendet, insbesondere Borosilikatglas 3.3. Es können aber auch andere Materialien, wie z. B. Metalle oder Kunststoffe, verwendet werden.

Das Kapillarrohr (1) in Fig. 1 ist über eine Schraub/Quetschverbindung (2) mit dem Vorratsgefäß (3) so verbunden, daß das Kapillarrohr in den zylindrischen Teil des Vorratsgefäßes (3) hineinragt. An dieser Position endet der kontinuierliche Ausfluß der Flüssigkeit aus dem Vorratsgefäß (3). Eine solche Anordnung ist vorteilhaft hinsichtlich der Couette-Korrektur.

Durch die Schraub/Quetschverbindung (2) ist das Kapillarrohr (1) auswechselbar und das Gerät leicht zu demontieren und zu reinigen.

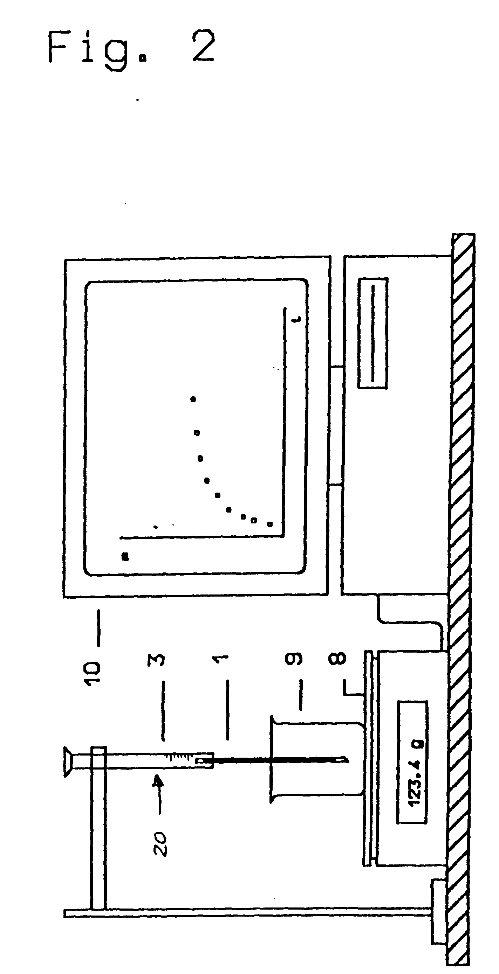

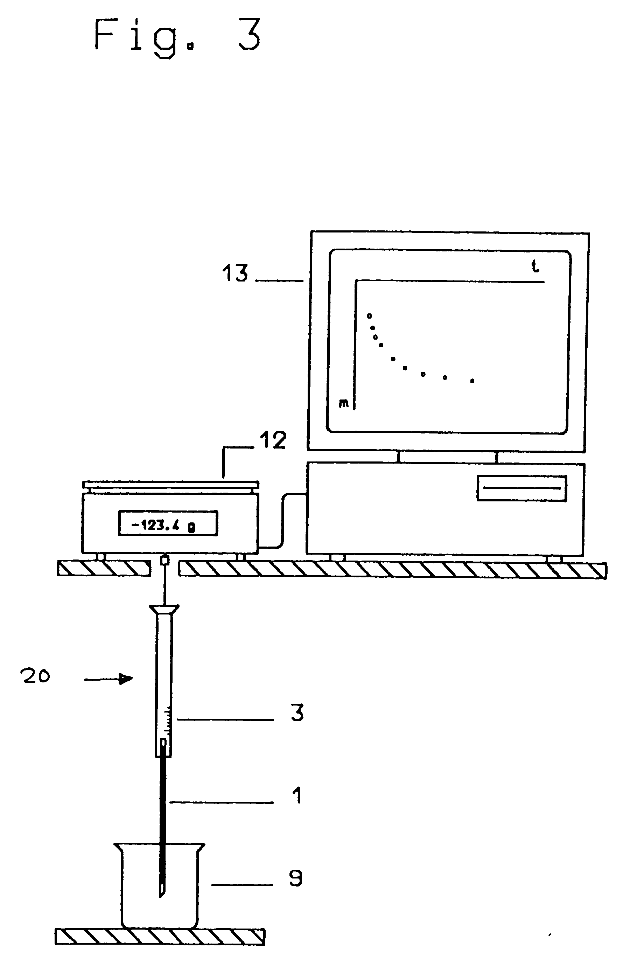

Fig. 2 und Fig. 3 zeigen eine Meßanordnung bei stehendem bzw. bei an der Waage hängendem Viskosimeter (20) in Verbindung mit einer elektronischen Waage (8, 12) und einem Computer.

Bei der stehenden Anordnung wird die Durchflußmenge über die Wägung der aus dem Viskosimeter ausfließenden Flüssigkeitsmenge, die auf eine Wägevorrichtung (8) fließt, die sich unterhalb des Viskosimeters (20) befindet, bestimmt.

Bei der hängenden Anordnung erfolgt die Bestimmung der Durchflußmenge über die Verringerung der Masse des an einer Wägevorrichtung (12) aufgehängten, mit Probeflüssigkeit befüllten Viskosimeters (20).

Als Waagen sind insbesondere Analysenwaagen mit einer Genauigkeit von besser als 1 mg geeignet.

Der Einlauf (7) des Kapillarrohres (1) ist kegelförmig aufgeweitet, um eine laminare Einströmung der Flüssigkeit in das Kapillarrohr (1) zu gewährleisten. Der Auslauf (6) des Kapillarrohres (1) ist aus dem gleichen Grund kegelförmig aufgeweitet, mündet jedoch in eine seitlich abgeschrägte, trompetenförmige Öffnung (5). Diese garantiert, zusammen mit der Abreißspitze (4), daß sich möglichst kleine Tropfen bilden.

Die Abreißspitze (4) kann auch, wie in Fig. 2 oder 3 dargestellt, in das Flüssigkeitsreservoir des Gefäßes (9) eintauchen, wodurch ein kontinuierlicher Abfluß der durch das Kapillarrohr (1) durchgesetzten Flüssigkeit gegeben wird. Der Auftrieb der Abreißspitze (4) kann bei genügend feiner Ausformung vernachlässigbar gering gehalten werden. Diese Ausgestaltung empfiehlt sich insbesondere dann, wenn die Messung der Änderung der Durchflußgeschwindigkeit über die Wägung der aus dem Viskosimeter (20) ausfließenden Flüssigkeitsmenge erfolgen soll.

Für die Tropfenbildung hat sich am Auslaufende (6) des Kapillarrohres (1) insbesondere die aus der DE-PS 32 27 955,8 bekannte rückdiffusionsfreie Dosier- und Titrierspitze erwiesen. Bei Verwendung dieser Spitze findet die Tropfenbildung außerhalb des Kapillarbereiches statt. Eine das Meßergebnis verfälschende Rückwirkung des Tropfens auf die Flüssigkeitssäule im Kapillarviskosimeter (20) wird damit vermieden.

Anstelle der Waage sind auch andere Wäge- oder Kraftmeßeinrichtungen einsetzbar. Eine zusätzlich optische Abtastung kann die Erfassung der abtropfenden Flüssigkeit zusätzlich verbessern. Solche Vorrichtungen sind z. B., wie bereits oben beschrieben, Lichtschranken oder Vorrichtungen zur Bilderkennung für die Erfassung der Tropfenfolge oder des gesamten Abtropfvorgangs. Tropfenfolge, -form und -größe können wichtige Daten für die Auswertung sein. Im einfachsten Fall wird davon ausgegangen, daß die Tropfen gleiche Größe haben, was z. B. für Routinemessungen zu eingeschränkten Anforderungen an die Meßauflösung der Wägeeinrichtung führen kann, weil mehrere Tropfen gesammelt gewogen werden können.

Für die rechnerische Auswertung kann anstelle eines handelsüblichen Computers auch jedes andere geeignete Auswertegerät, z. B. eine Auswerteeinheit mit eingebautem Mikroprozessor eingesetzt werden.

**Ausführungsbeispiel:**

Mit einem Kapillarviskosimeter aus Borosilikatglas nach Fig. 1 mit den Abmessungen

| Kapillarrohr | |
|---|---|
| Durchmesser (innen) : | 0,6 mm |
| Länge : | 100 mm |
| Vorratsgefäß: | |
| Durchmesser (innen) : | 30 mm |
| Länge : | 150 mm |
| Länge des in das Vorratsgefäß hineinragenden Abschnitts der Kapillare : | 20 mm |
| Auslaufspitze | |
| Länge : | 35 mm |

wurden Viskositätsmessungen an Wasser durchgeführt. Die Messung erfolgte mit "stehendem" Viskosimeter nach Fig. 2. Es wurde eine Analyse-Waage des Typs Sartorius A 210 S mit Datenausgang verwendet. Die Wägegenauigkeit war besser als 1 mg. Die Auswertung erfolgte mittels eines Computers des Typs IBM/PS 2, Modell 80, die Zeitmessung erfolgte computerintern mit einer Zeitauflösung von besser als 1/10 sec.

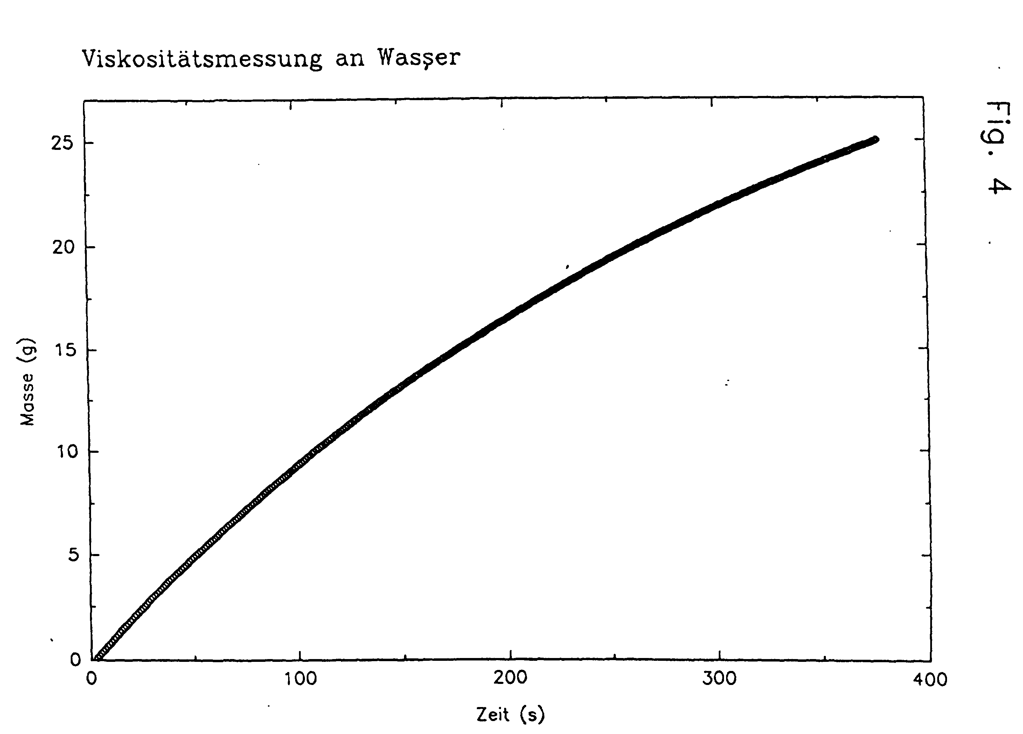

Fig. 4 zeigt die gemessene Kurve "m = f(t)". (Die Kurve, die sich bei der Meßanordnung mit hängendem Viskosimeter nach Fig. 3 ergibt, ist analog und entspricht der Spiegelung der o. g. Kurve an der t-Achse).

Fig. 5 zeigt die Kurve, die sich nach der numerischen Differentiation der Kurve "m = f(t)" ergibt. Die erhaltene Gerade entspricht dem Ergebnis der eingangs dargestellten mathematischen Ableitung und bestätigt somit die dem oben beschriebenen Meßprinzip zugrunde liegende Theorie. Aus dem Anstieg der Geraden läßt sich bei Kenntnis der Konstanten des Kapillarviskosimeters der kinematische Viskositätskoeffizient und zusätzlich bei Kenntnis der Dichte der Flüssigkeit der dynamische Viskositätskoeffizient der Flüssigkeit berechnen.

Durch die beschriebenen Variationen des Vorratsgefäßes (3) kann die Dichte der Meßflüssigkeit auch direkt während der Bestimmung der Viskosität ermittelt werden.

Es wurde außerdem beobachtet, daß die Kurven in anderer Form verlaufen, wenn die Meßproben nicht-newtonsches Fließverhalten aufweisen. Für die Messung solcher Flüssigkeiten haben sich Viskosimeter mit sehr großer Vorratsgefäßlänge (3) als günstige Anordnung herausgestellt, wobei wahlweise variabler Zusatzdruck angewendet werden kann.

**Patentansprüche**

1.  Verfahren zur Bestimmung der Viskosität von Flüssigkeiten mit einem Kapillarviskosimeter (2, 20), bei welchem die Flüssigkeit aus einem Vorratsgefäß (3) durch ein Kapillarrohr (1) geleitet wird, wobei die zeitliche Änderung der Durchflußgeschwindigkeit der Flüssigkeit durch das Viskosimeter (2, 20) erfaßt und aus den gemessenen Daten die Viskosität der Flüssigkeit unter Ausnutzung des Hagen-Poiseuille'schen Gesetzes bestimmt wird.

2.  Verfahren nach Anspruch 1,
    **dadurch gekennzeichnet**,
    daß das Verhältnis von Durchmesser der Kapillare (1) zu Durchmesser des Vorrategefäßes (3) zwischen 1 : 1,5 und 1 : 50 liegt.

3.  Verfahren nach Anspruch 1 oder 2,
    **dadurch gekennzeichnet**,
    daß zur Bestimmung der Änderung der Durchflußgeschwindigkeit die pro Zeiteinheit aus dem Viskosimeter (20) ausfließende Masse der Flüssigkeit gemessen wird.

4.  Verfahren nach Anspruch 3,
    **dadurch gekennzeichnet**,
    daß die Bestimmung der pro Zeiteinheit ausfließenden Masse der Flüssigkeit über die Messung der Verringerung der Masse des an einer Wägevorrichtung (12) aufgehängten, mit Probeflüssigkeit befüllten Viskosimeters (20) erfolgt.

5.  Verfahren nach Anspruch 3,
    **dadurch gekennzeichnet**,
    daß die Bestimmung der pro Zeiteinheit ausfließenden Masse der Flüssigkeit über die Wägung der aus dem Viskosimeter (20) ausfließenden Flüssigkeitsmenge erfolgt, die auf eine Wägevorrichtung (8) fließt, die sich unterhalb des Viskosimeters (29) befindet.

6.  Verfahren nach Anspruch 3,
    **dadurch gekennzeichnet**,
    daß die Bestimmungen der pro Zeiteinheit ausfließenden Masse der Flüssigkeit durch Messung der Tropfenfolge der aus dem Viskosimeter (2) austretenden Flüssigkeit in Abhängigkeit von der Zeit bei gleichzeitiger Bestimmung der Tropfenmasse erfolgt.

7.  Verfahren nach wenigstens einem der Ansprüche 3 bis 6,
    **dadurch gekennzeichnet**,
    daß zur gleichzeitigen Bestimmung der Dichte der Flüssigkeit mittels geeigneter Querschnittsänderungen im Vorratsgefäß (3), die vorgegebene Flüssigkeitsvolumina begrenzen, Änderungen im Massenfluß erzeugt werden, die als Markierungen für die Zuordnung der Masse zu den entsprechenden Flüssigkeitsvolumina ausgenutzt werden.

8.  Verfahren nach Anspruch 1 oder 2,
    **dadurch gekennzeichnet**,
    daß zur Bestimmung der zeitlichen Änderung der Durchflußgeschwindigkeit die Zeitdauer gemessen wird, die vorgegebene Flüssigkeitsvolumina benötigen, um vorgegebene Meßstellen zu passieren.

9.  Verfahren nach Anspruch 8,
    **dadurch gekennzeichnet**,
    daß die Tropfenfolge der aus dem Kapillarviskosimeter (2) austretenden Flüssigkeit in Abhängigkeit von der Zeit gemessen wird.

10. Verfahren nach Anspruch 8,

**dadurch gekennzeichnet**,
daß die Höhenänderung des Flüssigkeitsmeniskus im Vorratsgefäß (3) in Abhängigkeit von der Zeit gemessen wird.

11. Verfahren nach wenigstens einem der Ansprüche 1 bis 10,
**dadurch gekennzeichnet**,
daß die Meßwerte in der differentiellen Form

$$\frac{dX}{dt} = k \cdot X \qquad k = \frac{r4 \cdot g \cdot \rho \cdot \pi}{8 \cdot \eta \cdot A \cdot l}$$

mit

    X = Masse oder Volumen
    r = Radius oder Kapillare
    p = Dichte der Flüssigkeit
    A = Querschnittsfläche des Vorratsgefäßes
    l = Länge der Kapillare
    η = Viskosität
    g = Erdbeschleunigung

ausgewertet werden.

12. Verfahren nach wenigstens einem der Ansprüche 1 bis 11,
**dadurch gekennzeichnet**,
daß die Darstellung und Auswertung der Messungen mittels eines mit dem entsprechenden Meßgerät gekoppelten Computers (10, 13) erfolgt.

13. Verwendung eines Kapillarviskosimeters (2, 20), mit einem Vorratsgefäß (3) und einem Kapillarrohr (1), bei welchem das Verhältnis von Durchmesser des Kapillarrohrs (1) zu Durchmesser des Vorratsgefäßes (3) zwischen 1 : 1,5 und 1 : 50 liegt, für ein Verfahren nach wenigstens einem der Ansprüche 1, oder 3 bis 12.

14. Verwendung nach Anspruch 13,
bei welcher das Kapillarrohr (1) und das Vorratsgefäß (3) im wesentlichen eine zylindrische Gestalt aufweisen und geradlinig auf einer Achse angeordnet sind.

15. Verwendung nach Anspruch 13 oder 14,
bei welcher das Vorratsgefäß (3) zur gleichzeitigen Bestimmung der Dichte der Flüssigkeit in vorgegebenen Abständen Querschnittsänderungen aufweist.

16. Verwendung nach Anspruch 15,
bei welcher die Querschnittsänderungen Querschnittsverengungen sind, die durch einen in das zylindrische Vorratsgefäß (3) eingeführten Formkörper (11) erzeugt werden.

17. Verwendung nach wenigstens einem der Ansprüche 13 bis 16,
bei welcher das Vorratsgefäß (3) und das Kapillarrohr (1) lösbar miteinander verbunden sind.

18. Verwendung nach wenigstens einem der Ansprüche 13 bis 17,
bei welcher das Kapillarrohr (1) eine Auslaufspitze (6), insbesondere eine rückdiffusionsfreie Dosier- und Titrierspitze aufweist.

19. Verwendung nach wenigstens einem der Ansprüche 13 bis 18,
bei welcher das Kapillarrohr (1) in das Vorratsgefäß (3) hineinragt.

20. Verwendung nach wenigstens einem der Ansprüche 13 bis 19,
bei welcher das Kapillarviskosimeter (2, 20) aus Glas besteht.

21. Verwendung nach wenigstens einem der Ansprüche 13 bis 20,

bei welcher die Achsen der Viskosimeterteile in beliebigen Winkeln zur Senkrechten angeordnet sein können.

**Claims**

1. Method of determining the viscosity of liquids using a capillary viscometer (2, 20), in which the liquid is led out of a storage vessel (3) through a capillary tube (1), the changeover time of the flow rate of the liquid being recorded by the viscometer (2, 20) and the measured data being used to determine the viscosity of the liquid using the Hagen-Poiseuille law.

2. Method according to Claim 1, characterized in that the ratio of the diameter of the capillary (1) to the diameter of the storage vessel (3) is between 1:1.5 and 1:50.

3. Method according to Claim 1 or 2, characterized in that, in order to determine the change in flow rate, the mass of the liquid flowing out of the viscometer (20) per unit time is measured.

4. Method according to Claim 3, characterized in that the mass of the liquid flowing out per unit time is determined by measuring the reduction in mass of the viscometer (20), which is suspended from a weighing device (12) and is filled with sample liquid.

5. Method according to Claim 3, characterized in that the mass of the liquid flowing out per unit time is determined by weighing the amount of liquid flowing out of the viscometer (20), which amount of liquid flows onto a weighing device (8) which is situated beneath the viscometer (29).

6. Method according to Claim 3, characterized in that the mass of the liquid flowing out per unit time is determined by measuring the sequence of drops of the liquid emerging from the viscometer (2) as a function of time, with simultaneous determination of the mass of the drops.

7. Method according to at least one of Claims 3 to 6, characterized in that, for the purpose of simultaneously determining the density of the liquid by means of suitable changes in cross-section in the storage vessel (3), which changes delimit predetermined volumes of liquid, changes in the mass flow are generated, which are used as markers for assigning the mass to the corresponding volumes of liquid.

8. Method according to Claim l or 2, characterized in that, for the purpose of determining the change in flow rate over time, the period of time which predetermined volumes of liquid require to pass predetermined measuring points is measured.

9. Method according to Claim 8, characterized in that the sequence of drops of the liquid emerging from the capillary viscometer (2) is measured as a function of time.

10. Method according to Claim 8, characterized in that the change in height of the meniscus of the liquid in the storage vessel (3) is measured as a function of time.

11. Method according to at least one of Claims 1 to 10, characterized in that the measured values are evaluated in the differential form

$$\frac{dX}{dt} = k \cdot X \qquad k = \frac{r4 \cdot g \cdot \rho \cdot \pi}{8 \cdot \eta \cdot A \cdot l}$$

where

X = mass or volume
r = radius or capillary
$\rho$ = density of the liquid
A = cross-sectional area of the storage vessel
l = length of the capillary
$\eta$ = viscosity
g = acceleration due to gravity.

**12.** Method according to at least one of Claims 1 to 11, characterized in that the measurements are displayed and evaluated by means of a computer (10, 13) coupled to the corresponding measuring device.

**13.** Use of a capillary viscometer (2, 20), having a storage vessel (3) and a capillary tube (1), in which the ratio of the diameter of the capillary tube (1) to the diameter of the storage vessel (3) is between 1:1.5 and 1:50, for a method according to at least one of Claims 1 or 3 to 12.

**14.** Use according to Claim 13, in which the capillary tube (1) and the storage vessel (3) have an essentially cylindrical configuration and are arranged in a straight line on one axis.

**15.** Use according to Claim 13 or 14, in which the storage vessel (3), for the purpose of simultaneously determining the density of the liquid, has changes in cross-section at predetermined intervals.

**16.** Use according to Claim 15, in which the changes in cross-section are cross-sectional restrictions which are produced by a shaped body (11) introduced into the cylindrical storage vessel (3).

**17.** Use according to at least one of Claims 13 to 16, in which the storage vessel (3) and the capillary tube (1) are releasably connected to one another.

**18.** Use according to at least one of Claims 13 to 17, in which the capillary tube (1) has an outlet tip (6), in particular a metering and titration tip which is free of back diffusion.

**19.** Use according to at least one of Claims 13 to 18, in which the capillary tube (1) projects into the storage vessel (3).

**20.** Use according to at least one of Claims 13 to 19, in which the capillary viscometer (2. 20) consists of glass.

**21.** Use according to at least one of Claims 13 to 20, in which the axes of the parts of the viscometer may be arranged at any desired angles to the vertical.

**Revendications**

**1.** Procédé pour déterminer la viscosité de liquides à l'aide d'un viscosimètre (2, 20) à capillaire, dans lequel on fait passer dans un tube (1) capillaire le liquide contenu dans un récipient (3) d'alimentation et on enregistre la variation dans le temps de la vitesse d'écoulement du liquide à travers le viscosimètre (2, 20) et on détermine la viscosité du liquide à partir des données mesurées en utilisant la loi de Hagen-Poiseuille.

**2.** Procédé selon la revendication 1, caractérisé par le fait que le rapport du diamètre du capillaire (1) au diamètre du récipient (3) d'alimentation est compris entre 1:1,5 et 1:50.

**3.** Procédé selon la revendication 1 ou 2, caractérisé par le fait que pour déterminer la variation de la vitesse d'écoulement, on mesure la masse du liquide qui s'écoule du viscosimètre (20) par unité de temps.

**4.** Procédé selon la revendication 3, caractérisé par le fait que l'on détermine la masse de liquide qui s'écoule par unité de temps par mesure de la diminution de la masse du viscosimètre (20) rempli d'un liquide d'essai, suspendu à un dispositif de pesage (12).

**5.** Procédé selon la revendication 3, caractérisé par le fait que l'on détermine la masse de liquide qui s'écoule par unité de temps par pesage de la quantité de liquide sortant du viscosimètre (20), lequel liquide s'écoule dans un dispositif de pesage (8) placé en-dessous du viscosimètre (20).

**6.** Procédé selon la revendication 3, caractérisé par le fait que l'on détermine la masse de liquide qui s'écoule par unité de temps par mesure de la série de gouttes de liquide qui s'écoulent du viscosimètre (2) en fonction du temps et par détermination simultanée de la masse des gouttes.

**7.** Procédé selon au moins une des revendications 3 à 6, caractérisé par le fait que pour déterminer simultanément la densité du liquide, on produit, par des changements de section dans le récipient d'alimentation (3) qui délimitent des volumes déterminés de liquide, des variations dans le flux massique qui sont utilisées comme repères pour rapprocher la masse des volumes de liquide concernés.

8. Procédé selon la revendication 1 ou 2, caractérisé par le fait que pour déterminer la variation dans le temps de la vitesse d'écoulement, on mesure le temps mis par des volumes prédéterminés de liquide pour passer des points de mesure donnés.

9. Procédé selon la revendication 8, caractérisé par le fait que l'on mesure en fonction du temps la série de gouttes de liquide qui sortent du viscosimètre (2) à capillaire.

10. Procédé selon la revendication 8, caractérisé par le fait que l'on mesure la variation en fonction du temps de la hauteur du ménisque de liquide dans le récipient d'alimentation (3).

11. Procédé selon au moins une des revendications 1 à 10, caractérisé par le fait que l'on exploite les valeurs des mesures sous la forme différentielle

$$\frac{dX}{dt} = k*X \qquad k = \frac{r4*g*\rho*\pi}{8*\eta*A*l}$$

avec

X = Masse ou volumes
r = Rayon ou capillaires
ρ = Densité du liquide
A = Surface en section transversale du récipient d'alimentation
l = Longueur des capillaires
η = Viscosité
g = Accélération de la pesanteur.

12. Procédé selon au moins une des revendications 1 à 11, caractérisé par le fait que l'on représente et on exploite les mesures à l'aide d'un calculateur (10, 13) couplé à l'appareil de mesure concerné.

13. Utilisation d'un viscosimètre (2, 20) à capillaire comportant un récipient d'alimentation (3) et un tube capillaire (1), dans lequel le rapport du diamètre du tube capillaire (1) au diamètre du récipient (3) d'alimentation est compris entre 1:1,5 et 1:50, pour un procédé selon au moins une des revendications 1 ou 1 à 12.

14. Utilisation selon la revendication 13, dans laquelle le tube capillaire (1) et le récipient d'alimentation (3) ont une forme essentiellement cylindrique et sont disposés de manière rectiligne sur un axe.

15. Utilisation selon la revendication 13 ou 14, dans laquelle le récipient d'alimentation (3) comporte, aux fins de déterminer simultanément la densité du liquide, des changements de section qui sont disposés à des distances prédéterminées.

16. Utilisation selon la revendication 15, dans laquelle les changements de section sont des étranglements qui sont produits par un élément moulé (11) placé dans le récipient d'alimentation (3) cylindrique.

17. Utilisation selon l'une des revendications 13 à 16, dans laquelle le récipient d'alimentation (3) et le tube capillaire (1) sont liés l'un à l'autre de manière démontable.

18. Utilisation selon la revendication 13 ou 17, dans laquelle le tube capillaire (1) comporte une extrémité de sortie (6), notamment une extrémité de dosage et de titrage sans rétro-diffusion.

19. Utilisation selon la revendication 13 ou 18, dans laquelle le tube capillaire (1) pénètre dans le récipient d'alimentation (3).

20. Utilisation selon la revendication 13 ou 19, dans laquelle le viscosimètre (2, 20) à capillaire est en verre.

21. Utilisation selon la revendication 13 ou 20, dans laquelle les axes des éléments de viscosimètre peuvent former des angles quelconques avec la verticale.

# Fig. 1

EP 0 582 082 B1

# Fig. 2

14

# Fig. 3

## Fig. 4

Viskositätsmessung an Wasser

## Fig. 5

Viskositätsmessung an Wasser

dm/dt (g/s)

Masse (g)